# DEMANDE DE BREVET EUROPEEN

(11) **EP 1 750 049 A1**
(43) Date de publication de la demande: **07.02.2007**
(21) Numéro de dépôt: 05300641.7
(22) Date de dépôt: 02.08.2005
(51) Int. Cl.: F16L 37/28

(54) **Prise de connexion avec moyen anti-retour de liquide intégré**

(71) Demandeur: FRO S.p.A., 37135 Verone (IT)
(72) Inventeur: Bendazzoli, Silvano, 37134 Verone (IT); Moretti, Alessandro, 25127 Brescia (IT); Arzenton, Marco, 37128 Verone (IT)
(74) Mandataire: Pittis, Olivier

(57) **Abrégé**

L'invention est une prise (10) de connexion, conformée pour se raccorder sur un raccord de sortie de fluide, comprenant un corps (11) principal avec un passage interne (20) pour le fluide et des moyens de couplage/découplage (12, 15, 16) permettant un couplage ou un découplage de la prise (10) sur un raccord de sortie de fluide, caractérisée en ce qu'elle comporte, aménagé sur ledit passage interne (20), un moyen anti-retour de liquide (1) permettant de s'opposer à toute circulation de liquide au sein dudit passage interne (20) en direction du raccord de sortie auquel la prise (10) est connectée.

## Description

La présente invention porte sur une prise de connexion à un raccordement rapide apte à se raccorder sur un raccord de sortie de robinet à détendeur de fluide intégré, laquelle comprend un dispositif anti-retour de liquide.

Le document WO-A-02/44824 et le document WO-A-02/90813 enseignent des robinets-détendeurs de fluide comprenant des raccords de sortie de fluide à profils particuliers sur lesquels viennent se raccorder des prises de connexion à système raccordement rapide permettant de réaliser un soutirage du fluide délivré par lesdits robinets-détendeurs et son utilisation subséquente par l'utilisateur.

De tels robinets-détendeurs et prises à connexion rapide associées sont utilisés dans le domaine du soudage mais aussi dans d'autres domaines, tels que les domaines de l'alimentaire, du médical, des laboratoires ou autres.

Actuellement, les robinets à détendeurs intégrés de ce type comprennent un dispositif anti-retour de gaz permettant d'empêcher toute remontée intempestive et accidentelle de gaz depuis la prise de connexion vers le robinet-détendeur, lors du raccordement de ces éléments entre eux.

En effet, en l'absence d'un tel dispositif anti-retour de gaz, il pourrait se produire des remontées de gaz vers le robinet-détendeur, voire vers la source de gaz, telle une bouteille ou une canalisation, située en amont et une contamination de celle-ci, ce qui pourrait poser des problèmes d'hygiène et de sécurité du fait d'une contamination de la source de gaz par du gaz « impur » issue de la prise de raccordement.

Si un tel dispositif anti-retour de gaz est efficace contre les remontées intempestives de gaz, il a été toutefois constaté que ce dispositif ne permettait pas de s'opposer efficacement à des remontées non désirées de liquide ou de gaz liquéfié.

Autrement dit, le dispositif anti-retour de gaz des robinets-détendeurs ne permet pas d'arrêter les retours de liquide.

En outre, incorporer un dispositif anti-retour de liquide dans le corps du robinet-détendeur, sur le trajet du fluide, pose deux problèmes majeurs.

Tout d'abord, les dimensions des robinets-détendeurs sont réduites et dès lors l'intégration d'un tel dispositif est difficile du fait d'une absence de suffisamment de place disponible. Ensuite, une telle solution ne serait pas idéale car, si elle permettait d'arrêter les remontées de liquide, le liquide ainsi stoppé serait emprisonné au sein du corps du robinet-détendeur, ce qui conduirait à une contamination subséquente du gaz délivré par ledit robinet-détendeur, c'est-à-dire que le gaz qui traverserait le robinet-détendeur se chargerait progressivement avec du liquide préalablement arrêté et irait alors contaminer tous les sites situés en aval auxquels le robinet-détendeur serait ensuite connecté. On comprend que, dans le domaine alimentaire, médical, pharmaceutique ou analogue, un tel risque de contamination n'est pas acceptable.

De là, le problème qui se pose est de lutter contre les remontées intempestives de liquide depuis une prise de connexion vers un robinet-détendeur de gaz, lors du raccordement de ladite prise audit robinet-détendeur.

La solution de l'invention est une prise de connexion, conformée pour se raccorder sur un raccord de sortie de fluide, comprenant un corps principal avec un passage interne pour le fluide et des moyens de couplage/découplage permettant un couplage ou un découplage de la prise sur un raccord de sortie de fluide, caractérisée en ce qu'elle comporte, aménagé sur ledit passage interne, un moyen anti-retour de liquide permettant de s'opposer à toute circulation de liquide au sein dudit passage interne en direction du raccord de sortie auquel la prise est connectée.

Selon le cas, la prise de connexion de l'invention peut comprendre l'une ou plusieurs des caractéristiques suivantes :
- le moyen anti-retour de liquide est réalisé en un matériau souple déformable, de préférence le moyen anti-retour de liquide est en polymère ou élastomère.
- le moyen anti-retour de liquide est un clapet coopérant avec un moyen à ressort et un siège aménagé sur ledit passage interne de la prise.
- le moyen anti-retour de liquide est formé d'une pièce unique comprenant un passage axial.
- le passage axial du moyen anti-retour de liquide comporte un orifice amont et un orifice aval, ledit orifice amont présentant une surface de passage inférieure à celle de l'orifice aval.
- l'orifice amont comporte une surface de passage de fluide de forme circulaire, en forme de fente ou de croix.
- la partie amont du moyen anti-retour de liquide portant l'orifice amont a une forme de bec de canard.
- la partie amont du moyen anti-retour de liquide portant l'orifice amont a une forme de parapluie.

L'invention porte aussi sur un ensemble formé d'une prise de connexion selon l'invention raccordée à un raccord de sortie d'un robinet de distribution de gaz, en particulier d'un robinet à détendeur intégré.

Selon un autre aspect, l'invention concerne aussi un procédé de soutirage de fluide, en particulier de gaz, dans lequel on raccorde une prise de connexion selon l'invention au raccord de sortie d'un robinet de distribution de fluide, de manière à assurer un passage de fluide, en particulier de gaz, du robinet vers la prise en empêchant toute remontée de liquide de la prise vers et dans le robinet.

La solution de l'invention repose donc sur une incorporation d'un dispositif anti-retour de liquide non pas dans le corps du robinet-détendeur de fluide mais en amont de celui-ci, en considérant le sens de retour de liquide (i.e. de la prise vers le robinet), c'est-à-dire à l'intérieur de la prise de connexion venant se raccorder sur ledit robinet.

En effet, en procédant de la sorte, les remontées intempestives de liquide sont bloquées avant d'entrer dans le corps du robinet-détendeur, ce qui évite la contamination par le liquide puisqu'il reste piégé dans la prise de connexion.

De plus, en séparant les fonctions d'anti-retour de liquide et d'anti-retour de gaz, on accroît la sécurité et l'hygiène de l'ensemble.

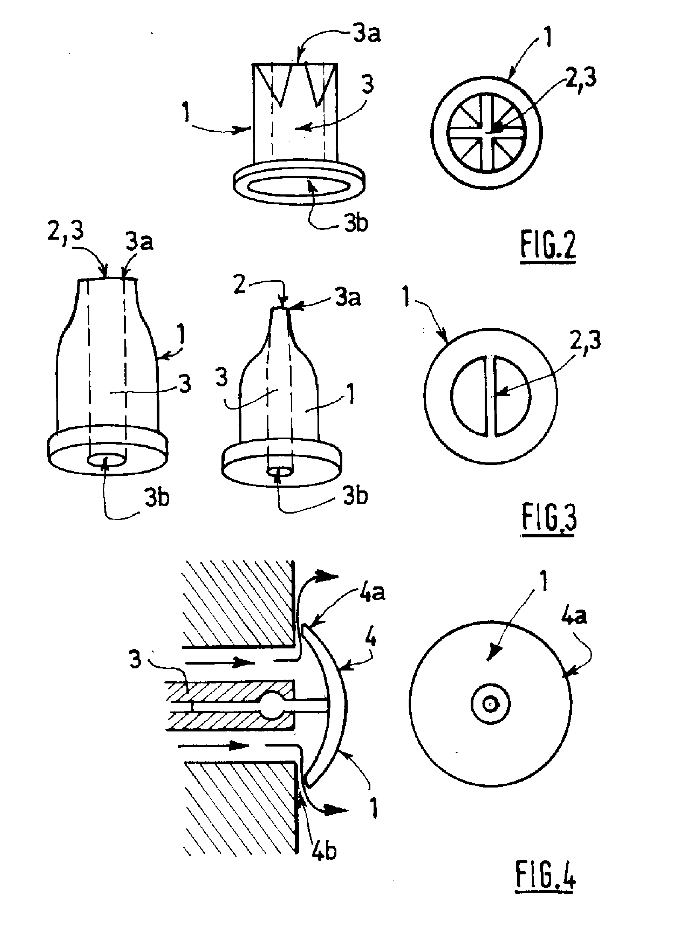

Le dispositif anti-retour de liquide selon l'invention peut revêtir différentes formes, comme schématisé sur les figures 2 à 4 par exemple. Ainsi, il peut être constitué d'une pièce unique ou de plusieurs sous-unités.

En outre, il peut être formé en un matériau élastomère, métallique ou plastique et être, selon le cas, déformable, souple ou rigide.

La figure 2 représente un mode de réalisation selon lequel le dispositif anti-retour de liquide se compose d'un corps 1 de forme générale cylindrique comportant un passage central axial 3 avec une ouverture centrale 2 en forme de croix, en forme de « X » ou de « + », destinée à être placée face à l'arrivée de liquide.

La figure 3 représente un autre mode de réalisation selon lequel l'ouverture 2 est une fente en forme de « I ».

La figure 4 représente encore un autre mode de réalisation selon lequel le dispositif de l'invention a une forme générale de « parapluie » 4 constitué d'un matériau déformable, tel un matériau élastomère (caoutchouc) ou polymère.

Dans ce cas, en fonctionnement normal, c'est-à-dire en l'absence de retour de liquide, le dispositif se déforme en permettant ainsi une circulation du gaz autour de la circonférence externe ou rebord 4a du « parapluie » 4,alors qu'en cas de présence de liquide, l'arrêt de ce liquide est réalisé par l'intermédiaire du « parapluie » 4 qui vient prendre appui sur un siège 4b du corps pour obturer le passage entre le rebord 4a et ledit siège 4b, et s'opposer ainsi efficacement à toute remontée de liquide. Le liquide est donc retenu par le « parapluie » 4.

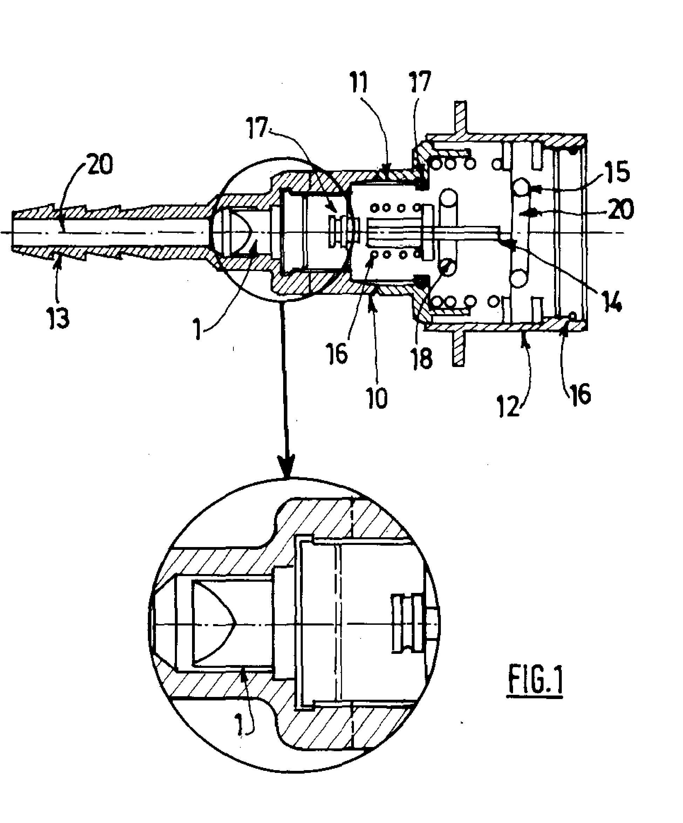

La figure 1 représente, quant à elle, une prise de connexion 10 selon l'invention munie d'un dispositif anti-retour de fluide 1 qui est identique à celui de la figure 3. Il est à souligner que ce dispositif est donné à titre illustratif mais non limitatif, et que ceux des figures 2 et 4 peuvent tout aussi bien convenir.

Comme on le voit, la prise 10 de connexion est formée d'un corps de prise 11 comprenant une partie amont 13 à laquelle vient se fixer une canalisation de fluide, telle une conduite souple ou flexible, et une partie aval 12 destinée à venir se fixer au raccord de sortie d'un robinet-détendeur de gaz (non montré).

De façon classique, cette prise 10 comporte au niveau de sa partie aval 12, des éléments de connexion rapide permettant un couplage/découplage de la prise 10 sur le raccord du robinet-détendeur.

Plus précisément, le couplage/découplage de la prise 10 se fait en faisant coulisser axialement le manchon 16 mobile qui coopère avec différents éléments internes du corps 1 pour permettre le couplage ou le découplage de la prise 10 d'un raccord de robinet de gaz, notamment avec un ressort 15. Des joints 16, 17, 18 toriques permettent de garantir l'étanchéité du raccordement.

Lors du raccordement de la prise 10, la pièce centrale 14 permet d'aller exercer une pression mécanique sur un clapet mobile du raccord du robinet dans un sens tendant à le décoller de son siège, ce qui permet de libérer le passage du gaz et l'autorise à circuler en direction de la prise 10.

Il est à noter toutefois que le système de couplage/découplage peut être différent, par exemple à la place du système à manchon mobile, l'accrochage peut se faire en poussant un bouton ou similaire.

En outre, le clapet anti-retour de liquide peut être aussi de type plus classique, c'est-à-dire comprendre un ressort et clapet, en métal ou plastique, coopérant avec un siège de clapet.

Le clapet peut comprendre un joint ou une pastille d'étanchéité. Toutefois, on peut aussi agencer le joint d'étanchéité directement au niveau du siége de clapet.

Grâce à l'invention, on peut procéder au soutirage d'un fluide, en particulier d'un gaz, en toute sécurité en raccordant une prise 10 de connexion selon l'invention au raccord de sortie d'un robinet de distribution de fluide, ce qui assure une circulation du fluide du robinet vers la prise 10 de connexion tout en empêchant toute remontée de liquide de la prise 10 vers le robinet. Ceci permet de garantir une très grande qualité d'hygiène lors du transfert du gaz.

## Revendications

1. Prise (10) de connexion, conformée pour se raccorder sur un raccord de sortie de fluide, comprenant un corps (11) principal avec un passage interne (20) pour le fluide et des moyens de couplage/découplage (12, 15, 16) permettant un couplage ou un découplage de la prise (10) sur un raccord de sortie de fluide, **caractérisée en ce qu'**elle comporte, aménagé sur ledit passage interne (20), un moyen anti-retour de liquide (1) permettant de s'opposer à toute circulation de liquide au sein dudit passage interne (20) en direction du raccord de sortie auquel la prise (10) est connectée.

2. Prise selon la revendication 1, **caractérisée en ce que** le moyen anti-retour (1) de liquide est réalisé en un matériau souple déformable, de préférence le moyen anti-retour (1) de liquide est en polymère ou élastomère.

3. Prise selon la revendication 1, **caractérisée en ce que** le moyen anti-retour (1) de liquide est un clapet coopérant avec un moyen à ressort et un siège aménagé sur ledit passage interne (20) de la prise.

4. Prise selon l'une des revendications 1 ou 2, **caractérisée en ce que** le moyen anti-retour (1) de liquide est formé d'une pièce unique comprenant un passage axial (3).

5. Prise selon l'une des revendications 1, 2 ou 4, **caractérisée en que** le passage axial (2) du moyen anti-retour (1) de liquide comporte un orifice amont (3a) et un orifice aval (3b), ledit orifice amont (3a) présentant une surface (2) de passage inférieure à celle de l'orifice aval (3b).

6. Prise selon l'une des revendications 1, 2, 4 ou 5, **caractérisée en ce que** l'orifice amont (3a) comporte une surface (2) de passage de fluide de forme circulaire, en forme de fente ou de croix.

7. Prise selon l'une des revendications 1, 2, 4 à 6, **caractérisée en ce que** la partie amont du moyen anti-retour de liquide portant l'orifice amont (3a) a une forme de bec de canard.

8. Prise selon l'une des revendications 1, 2, 4 à 6, **caractérisée en ce que** la partie amont du moyen anti-retour de liquide portant l'orifice amont (3a) a une forme de parapluie (4, 4a).

9. Ensemble formé d'une prise (10) de connexion selon l'une des revendications 1 à 8 raccordée à un raccord de sortie d'un robinet de distribution de gaz, en particulier d'un robinet à détendeur intégré.

10. Procédé de soutirage de fluide, en particulier de gaz, dans lequel on raccorde une prise (10) de connexion selon l'une des revendications 1 à 8 au raccord de sortie d'un robinet de distribution de fluide, de manière à assurer un passage de fluide du robinet vers la prise (10) en empêchant toute remontée de liquide de la prise (10) vers le robinet.

## Revendications modifiées

### Revendications modifiées conformément à la règle 86(2) CBE.

**1.** Prise (10) de connexion, conformée pour se raccorder sur un raccord de sortie de fluide, comprenant un corps (11) principal avec un passage interne (20) pour le fluide et des moyens de couplage/découplage (12, 15, 16) permettant un couplage ou un découplage de la prise (10) sur un raccord de sortie de fluide, **caractérisée en ce qu'**elle comporte, aménagé sur ledit passage interne (20), un moyen anti-retour de liquide (1) permettant de s'opposer à toute circulation de liquide au sein dudit passage interne (20) en direction du raccord de sortie auquel la prise (10) est connectée, et **en ce que**
**caractérisée en ce que** le moyen anti-retour (1) de liquide est réalisé en un matériau souple déformable.

**2.** Prise selon la revendication 1, **caractérisée en ce que** le moyen anti-retour (1) de liquide est en polymère ou élastomère.

**3.** Prise selon la revendication 1, **caractérisée en ce que** le moyen anti-retour (1) de liquide est un clapet coopérant avec un moyen à ressort et un siège aménagé sur ledit passage interne (20) de la prise.

**4.** Prise selon l'une des revendications 1 ou 2, **caractérisée en ce que** le moyen anti-retour (1) de liquide est formé d'une pièce unique comprenant un passage axial (3).

**5.** Prise selon l'une des revendications 1, 2 ou 4, **caractérisée en que** le passage axial (2) du moyen anti-retour (1) de liquide comporte un orifice amont (3a) et un orifice aval (3b), ledit orifice amont (3a) présentant une surface (2) de passage inférieure à celle de l'orifice aval (3b).

**6.** Prise selon l'une des revendications 1, 2, 4 ou 5, **caractérisée en ce que** l'orifice amont (3a) comporte une surface (2) de passage de fluide de forme circulaire, en forme de fente ou de croix.

**7.** Prise selon l'une des revendications 1, 2, 4 à 6, **caractérisée en ce que** la partie amont du moyen anti-retour de liquide portant l'orifice amont (3a) a une forme de bec de canard.
